# DEMANDE DE BREVET EUROPEEN

(11) **EP 4 696 949 A1**
(43) Date de publication de la demande: **18.02.2026**
(21) Numéro de dépôt: 25191392.7
(22) Date de dépôt: 23.07.2025
(51) Int. Cl.: F24S 25/10

(54) **STRUCTURE DE SUPPORT D'UNE TRAVERSE, SON PROCÉDÉ DE PRÉ-ASSEMBLAGE ET SON PROCÉDÉ D'INSTALLATION**

(30) Priorité: 25.07.2024 FR 2408246
(71) Demandeur: Caillau, 41200 Romorantin-Lanthenay (FR)
(72) Inventeur: RACOILLET, Guillaume, 41200 PRUNIERS EN SOLOGNE (FR); PERROT, Baptiste, 41000 BLOIS (FR); CRESSON, Matthieu, 41130 CHATILLON SUR CHER (FR)
(74) Mandataire: Cabinet Beau de Loménie

(57) **Abrégé**

Procédé d'installation d'une structure de support (100) d'une traverse (150), telle qu'une traverse d'ombrière, comprenant la fourniture d'une structure comprenant au moins une paire (12, 22, 32) de montants (10, 20, 30, 40) articulés l'un par rapport à l'autre par une articulation (14, 24, 34), la modification de la position relative des montants (10, 20, 30, 40) au moyen de l'articulation (14, 24, 34), et l'ancrage d'une partie (100b) de la structure vis-à-vis du sol (S), une partie opposée (100a) de la structure étant configurée pour soutenir la traverse (150). Structure de support (100) correspondante et procédé de pré-assemblage d'une telle structure de support (100).

## Description

### Domaine Technique

Le présent exposé concerne un procédé d'installation d'une structure de support d'une traverse, une telle structure de support et un procédé de pré-assemblage d'une telle structure de support. Une telle structure de support peut être utilisée pour soutenir des traverses destinées à être maintenues en hauteur, par exemple des traverses d'ombrières.

### Technique antérieure

Une ombrière est un dispositif destiné à fournir de l'ombre et comprenant des traverses montées sur des supports. Ces dernières années, l'usage d'ombrières s'est largement développé aussi bien dans l'agriculture, pour apporter de l'ombre à certaines plantes, que dans le secteur de l'énergie, les ombrières servant de support en hauteur pour des panneaux photovoltaïques. On parle même parfois de système agrivoltaïque lorsque ces deux applications sont combinées.

Les supports sont dimensionnés en fonction des traverses à soutenir. Typiquement, à partir d'une certaine taille, chaque traverse peut être portée par plusieurs poteaux. Lors de l'installation, ces poteaux sont montés indépendamment les uns des autres, ce qui est long et peut conduire à des interversions ou des erreurs de positionnement. Toutefois, il serait difficilement envisageable de pré-assembler ces poteaux en usine, à cause de l'encombrement important de la structure ainsi créée, qui limite les possibilités de transport vers le site d'installation.

Il existe donc un besoin pour un nouveau type de structure de support.

### Exposé de l'invention

A cet effet, le présent exposé concerne un procédé d'installation d'une structure de support d'une traverse, telle qu'une traverse d'ombrière, comprenant la fourniture d'une structure comprenant au moins une paire de montants articulés l'un par rapport à l'autre par une articulation, la modification de la position relative des montants au moyen de l'articulation, et l'ancrage d'une partie de la structure vis-à-vis du sol, une partie opposée de la structure étant configurée pour soutenir la traverse.

Les étapes du procédé d'installation peuvent être mises en œuvre dans l'ordre indiqué ci-dessus ou dans n'importe quel ordre techniquement pertinent : ainsi, l'ancrage vis-à-vis du sol peut être effectuée avant ou après la modification de la position relative des montants.

La structure de support présente des caractéristiques mécaniques suffisantes pour supporter la traverse qui y est attachée, ainsi que les autres composants qui ont vocation à reposer sur cette traverse, tel qu'une couverture de toit, des panneaux solaires, etc. Au sens du présent exposé, on appelle montant un élément qui s'étend principalement selon une dimension de l'espace : sa longueur, ou dimension longitudinale, est au moins un ordre de grandeur plus grand que sa largeur et son épaisseur. On appelle direction transversale une direction perpendiculaire à la direction longitudinale d'un montant.

La structure de support comprend au moins deux montants articulés l'un par rapport à l'autre : ainsi, à moins d'un verrouillage de l'articulation, la position relative des montants peut être modifiée. Les montants articulés l'un par rapport à l'autre forment une paire, la structure de support pouvant comprendre, comme il sera détaillé ultérieurement, une ou plusieurs paires de montants. Dans la présente description, et sauf indication contraire, par « un » ou « l' »élément (par exemple paire de montants, etc.), on entend « au moins un » ou « l'au moins un » ou encore « chaque » élément. Réciproquement, l'emploi générique du pluriel peut inclure le singulier.

La structure de support est configurée pour supporter une traverse par rapport au sol. Ainsi, une partie de la structure de support, typiquement d'un côté des montants dans la direction longitudinale, peut être ancrée vis-à-vis du sol, c'est-à-dire à même le sol (directement au sol) ou dans un ouvrage lui-même en contact avec le sol (indirectement au sol), tandis qu'une partie opposée de la structure, typiquement de l'autre côté des montants dans la direction longitudinale, peut comprendre des moyens pour soutenir la traverse.

Grâce au fait que la structure de support comprend une articulation d'un montant par rapport à l'autre, la fourniture de la structure peut se faire dans une configuration adaptée à son transport ou sa manutention. Sur site, la structure de support est ensuite mise en place grâce à l'articulation : les montants sont déplacés l'un par rapport à l'autre pour venir dans la configuration dans laquelle ils sont aptes à soutenir la traverse. Ainsi, la structure de support peut être prémontée en usine pour simplifier l'installation de la structure de support sans complexifier son transport.

La structure de support peut être désinstallée en suivant les mêmes étapes, dans l'ordre inverse.

Dans certains modes de réalisation, la modification de la position relative des montants comprend l'écartement des montants l'un par rapport à l'autre. Ainsi, la structure de support peut être fournie dans une première configuration, dite compacte, où les montants sont relativement proches l'un de l'autre ou du moins occupent un encombrement réduit, et sur site, être amenée dans une deuxième configuration, dite déployée, grâce à l'écartement des montants l'un par rapport à l'autre.

Dans certains modes de réalisation, le procédé d'installation comprend, après modification de la position relative des montants, le verrouillage de l'articulation de façon à figer la position relative des montants. Ainsi, les montants peuvent être maintenus fermement en position pour le support de la traverse. Alternativement, le verrouillage de l'articulation peut ne pas être nécessaire si la position relative des montants est bloquée autrement, par exemple à leur extrémité opposée à l'articulation.

Le verrouillage de l'articulation peut intervenir immédiatement après la modification de la position relative des montants ou bien ultérieurement, par exemple après positionnement de la traverse, afin de conserver une certaine marge d'ajustement.

Notamment, dans certains modes de réalisation, le procédé d'installation comprend la fixation de la traverse à un premier des montants, puis la modification de la position relative d'un autre montant par rapport audit premier montant de façon à permettre la fixation de la traverse à l'autre montant, puis le verrouillage de l'articulation de façon à figer la position relative de l'autre montant. L'autre montant peut être un montant de la même paire que le premier montant, ou d'une paire différente. Grâce à ces dispositions, la position de l'autre montant peut être ajustée après fixation de la traverse au premier montant, ce qui permet d'assurer que la position de l'autre montant permette bien la fixation de la traverse. L'installation de la structure de support est ainsi simplifiée car l'installateur n'a besoin de fixer que deux éléments à la fois, à savoir la traverse et le premier montant, puis la traverse et l'autre montant, puis l'autre montant et l'articulation.

Le présent exposé concerne également une structure de support d'une traverse, telle qu'une traverse d'ombrière, comprenant au moins une paire de montants articulés l'un par rapport à l'autre par une articulation configurée pour permettre la modification de la position relative des montants, une partie de la structure étant configurée pour être ancrée vis-à-vis du sol et une partie opposée de la structure étant configurée pour soutenir la traverse. La structure de support peut avoir tout ou partie des caractéristiques mentionnées précédemment.

Dans certains modes de réalisation, les montants sont articulés en rotation. Ainsi, la modification de la position relative des montants d'une paire comprend l'augmentation ou la diminution de l'angle formé par les montants de cette paire. La rotation permet de réduire au maximum l'angle entre les montants, ce qui diminue l'encombrement global de la structure de support en configuration compacte. Les montants peuvent être articulés uniquement en rotation. En variante, l'articulation peut permettre non seulement une rotation mais aussi un coulissement d'un montant par rapport à l'autre.

Dans certains modes de réalisation, la structure de support comprend plusieurs paires de montants articulés l'un par rapport à l'autre, au moins un des montants de la structure étant commun à deux paires consécutives. Par exemple, un montant dit central peut appartenir à une première paire qu'il forme avec un montant à sa gauche et à une deuxième paire qu'il forme avec un autre montant à sa droite. Les paires de montants sont donc liées l'une à l'autre au moyen d'un montant commun à deux paires consécutives. Cela permet de créer des structures de support plus robustes tout en conservant les avantages exposés précédemment.

Dans certains modes de réalisation, la structure comprend quatre montants agencés en trois paires consécutives selon une forme générale de W. La forme générale de W comprend quatre branches, correspondant aux quatre montants, reliées par trois sommets, où peuvent se trouver les articulations respectives des paires de montants. Toutefois, un nombre différent de montants pourrait être prévu, par exemple deux, trois, cinq ou six montants. Par ailleurs, il est également possible de prévoir une coupure entre les paires de montants, au sens où deux paires consécutives peuvent ne pas être liées, c'est-à-dire ne pas partager de montant commun, qu'elles soient ou non chacune liées à d'autres paires par ailleurs. Ainsi, la structure proposée est de conception particulièrement flexible.

Dans certains modes de réalisation, les montants ont une section carrée. Une section fermée permet de faciliter l'articulation, tandis qu'une section carrée limite le flambage. La section peut être carrée transversalement à la direction longitudinale des montants.

Dans certains modes de réalisation, l'articulation est pourvue d'une butée, optionnellement amovible, configurée pour limiter le débattement des montants l'un par rapport à l'autre. Typiquement, la butée peut être prévue pour limiter l'écartement d'un montant par rapport à l'autre. La butée peut fixer une borne supérieure à l'angle formé par les deux montants. Une telle butée est particulièrement utile pour éviter que les montants, en cours d'installation, ne prennent des positions trop éloignées de leurs positions désirées. La butée peut être dimensionnée pour résister au poids du montant. La butée peut être prévue au niveau de l'articulation, par exemple sur la pièce d'articulation, mais peut aussi être prévue sur un autre composant de la structure de support. Par exemple, la butée peut être une pièce dédiée indépendante de l'articulation.

Dans certains modes de réalisation, la partie configurée pour être ancrée vis-à-vis du sol comprend un sabot, le sabot comprenant une semelle et une armature de fixation de la semelle à un moins un des montants. La semelle désigne une partie, de préférence plane ou quasi-plane, permettant un ancrage stable vis-à-vis du sol. La semelle peut comprendre des moyens de fixation au sol, par exemple des trous destinés à accueillir des éléments complémentaires tels que des vis, pieux, agrafes, etc. L'armature de fixation de la semelle à un moins un des montants, plus simplement appelée armature, est fixe par rapport à la semelle et permet d'assurer la liaison entre la semelle et le montant considéré. Ainsi, le sabot permet un bon ancrage de la structure de support vis-à-vis du sol. En utilisation, le sabot peut se trouver dans la partie basse de la structure de support.

Dans certains modes de réalisation, le sabot forme une articulation pour une paire de montants. Par exemple, l'un des montants ou chacun des montants peut être mobile par rapport au sabot, et ce faisant, mobile par rapport à l'autre montant.

Dans certains modes de réalisation, la partie opposée, configurée pour soutenir la traverse, est prévue sur une prolongation d'un des montants au-delà de l'articulation. Cette configuration a plusieurs avantages : d'une part, l'articulation n'interfère pas avec ladite partie opposée. D'autre part, pour une paire de montants, il est possible de ne soutenir la traverse que par un montant de la paire, à savoir sur la prolongation précitée. Cela facilite l'installation, étant précisé que l'autre montant soutient indirectement la traverse en étant couplé au premier montant de la paire.

Dans certains modes de réalisation, la partie opposée comprend, sur au moins un des montants, un guide configuré pour coopérer avec la traverse de façon à guider la traverse en coulissement. Le guide peut prendre la forme d'un rail continu ou discontinu, d'un ou plusieurs épaulements, etc. Grâce à un tel guide, l'installation de la traverse est facilitée, et son positionnement précis peut être ajusté finement, avec un effort moindre, pour correspondre à la position des autres montants.

Dans certains modes de réalisation, la structure est pré-percée pour son ancrage vis-à-vis du sol et/ou pour le verrouillage de l'articulation. Par exemple, comme mentionné précédemment, la semelle peut comprendre des trous pour l'ancrage vis-à-vis du sol. Alternativement ou en complément, l'armature et/ou au moins un montant peut être muni d'un ou plusieurs trous pour verrouiller l'articulation. Le fait de pré-percer la structure accélère encore davantage son installation sur site.

Dans certains modes de réalisation, l'articulation comprend au moins l'un d'un pivot et d'une glissière, porté par une pièce distincte des montants. L'articulation en tant que telle peut être formée par une ou plusieurs pièces ; le fait de prévoir des pièces externes aux montants permet de conserver l'intégrité structurelle des montants.

Le présent exposé concerne également un procédé de pré-assemblage d'une structure de support telle que précédemment décrite, comprenant la fourniture d'au moins une paire de montants et l'assemblage des montants d'une même paire par une articulation configurée pour permettre la modification de la position relative des montants, les montants étant assemblés l'un à l'autre dans une position relative différente de la position dans laquelle la structure est configurée pour soutenir la traverse. Grâce à un tel pré-assemblage, la structure de support peut être fabriquée et mise dans la première configuration précitée, avant d'être installée sur site, mise en dans la deuxième configuration précitée et soutenir ainsi la traverse.

Dans certains modes de réalisation, l'articulation est assemblée rigidement à l'un des montants de la paire et assemblée avec au moins un degré de liberté à l'autre des montants de la paire. Ainsi, les montants restent mobiles l'un par rapport à l'autre tout en simplifiant l'installation de la structure de support, car il suffit de fixer le montant mobile à l'articulation pour rigidifier la structure de support. Une structure de support ainsi préassemblée permet donc une installation sur site particulièrement rapide.

Dans le présent exposé, les caractéristiques relatives à la structure de support peuvent naturellement s'étendre au procédé d'installation ou au procédé de pré-assemblage, mutatis mutandis, et réciproquement.

### Brève description des dessins

D'autres caractéristiques et avantages de l'objet du présent exposé ressortiront de la description suivante de modes de réalisation, donnés à titre d'exemples non limitatifs, en référence aux figures annexées.
La figure 1 représente une structure de support selon un mode de réalisation, à une première étape de son installation (configuration compacte), en vue de côté.
La figure 2 est une vue en perspective d'une articulation selon un mode de réalisation.
La figure 3 représente une structure de support selon un mode de réalisation, à une deuxième étape de son installation, en vue de côté.
La figure 4 représente une structure de support selon un mode de réalisation, à une troisième étape de son installation, en vue de côté.
La figure 5 représente une structure de support selon un mode de réalisation, à une quatrième étape de son installation (configuration déployée), en vue de côté.
La figure 6 est une vue en perspective de la structure de support dans la configuration de la figure 5.

### Description des modes de réalisation

Afin de rendre plus concret l'exposé, un exemple de structure de support, de procédé de pré-assemblage et de procédé d'installation est décrit en détail ci-après, en référence aux dessins annexés. Il est rappelé que l'invention ne se limite pas à cet exemple.

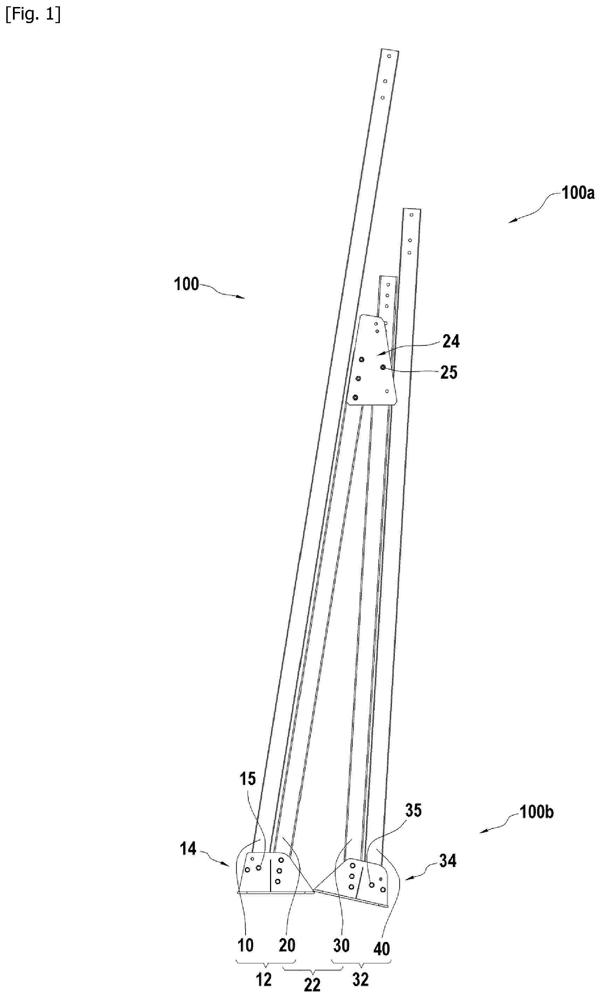

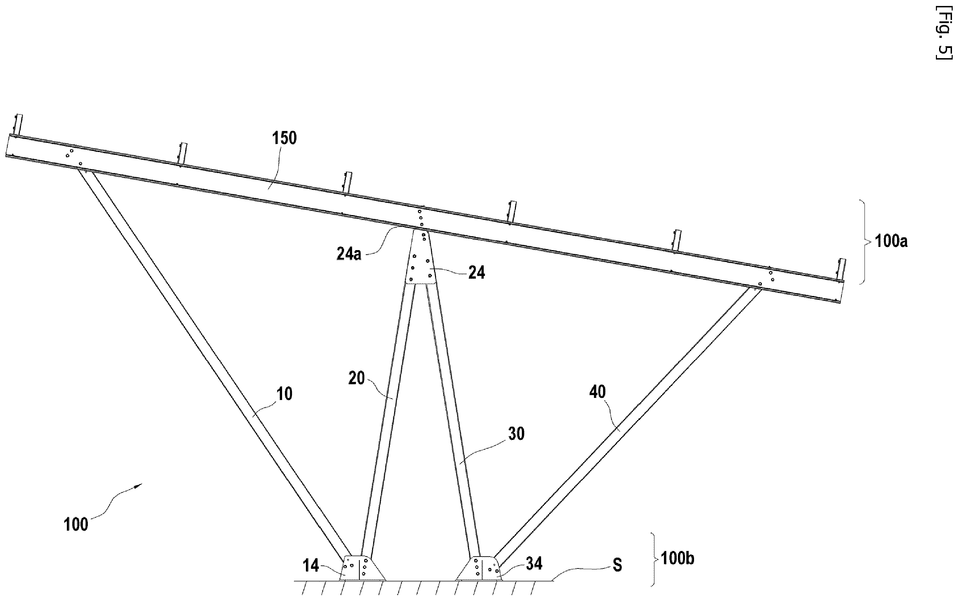

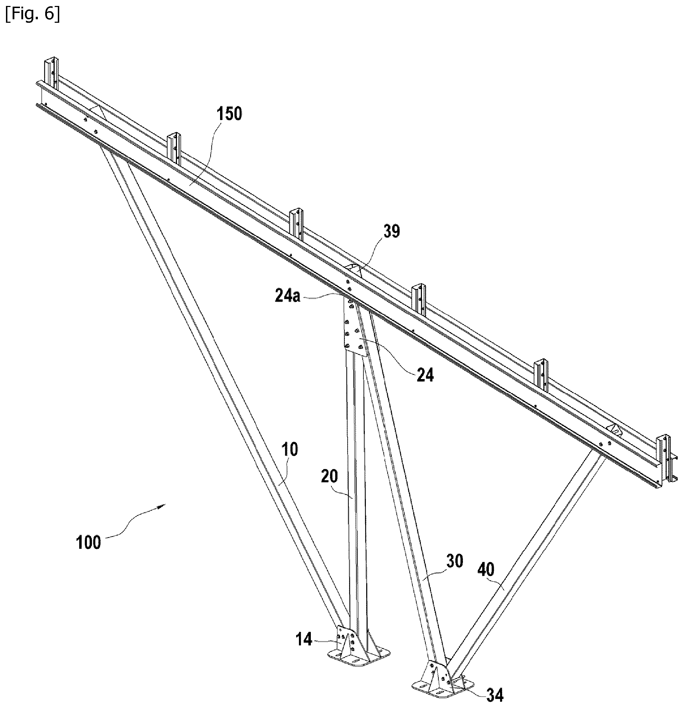

La figure 1 représente une structure de support 100 pour le support d'une traverse 150 qui sera décrite ultérieurement en référence aux figures 5 et 6. La structure de support 100 comprend au moins deux montants, ici quatre montants 10, 20, 30, 40, agencés en une ou plusieurs paires. En l'occurrence, la structure de support 100 comprend une première paire 12 formée du premier montant 10 et du deuxième montant 20, une deuxième paire 22 formée du deuxième montant 20 et du troisième montant 30, et une troisième paire 32 formée du troisième montant 30 et du quatrième montant 40. Sauf mention contraire, les informations décrites au sujet d'un montant ou d'une paire peuvent également s'appliquer aux autres montants ou aux autres paires, respectivement. Comme on le relève d'emblée, un montant peut être commun à deux paires consécutives : dans cet exemple, le deuxième montant 20 est commun à la première paire 12 et à la deuxième paire 22, et le troisième montant est commun à la deuxième paire 22 et à la troisième paire 32.

Au sein d'une paire, les montants sont articulés l'un par rapport à l'autre. Ainsi, la première paire 12 comprend une première articulation 14. De même, mais indépendamment, les deuxième et troisième paires 22, 32 comprennent respectivement des deuxième et troisième articulations 24, 34. Les articulations 14, 24, 34 sont configurées pour permettre la modification de la position relative des montants 10 et 20, 20 et 30, 30 et 40 respectivement. Par exemple, comme illustré sur la figure 1, l'articulation 14, 24, 34 peut comprendre un pivot 15, 25, 35 porté par une pièce distincte des montants. Alternativement ou en complément, l'articulation 14, 24, 34, pourrait comprendre une glissière. Comme on le décrira plus en détail par la suite, le pivot 15, 25, 35 peut prendre la forme d'un boulon.

Globalement, la structure de support 100 comprend une partie 100b, représentée en bas sur la figure 1, configurée pour être ancrée vis-à-vis du sol, et une partie opposée 100a, représentée en haut sur la figure 1, configurée pour soutenir la traverse 150. Par souci de concision, on se réfère ci-après aux parties hautes et basses de la structure de support et des montants conformément à l'orientation de la figure 1, sans exclure toutefois que la structure de support 100 soit utilisée dans une autre orientation.

Pour pré-assembler une telle structure de support 100, on fournit au moins une paire 12, 22, 32 de montants 10, 20, 30, 40. Les montants 10, 20, 30, 40 peuvent avoir toute forme souhaitée, par exemple une forme de profilé à section fermée, notamment carrée. Les montants 10, 20, 30, 40 peuvent par ailleurs être faits de tout matériau souhaité, par exemple en métal, typiquement en acier galvanisé. Les montants 10, 20, 30, 40 peuvent être pré-percés pour leur assemblage à une articulation 14, 24, 34 et/ou à la traverse 150.

Une fois les montants 10, 20, 30, 40 fournis, on assemble les montants d'une même paire (par exemple les montants 10, 20 de la première paire 12) par une articulation (par exemple la première articulation 14) configurée pour permettre la modification de la position relative des montants. En l'espèce, les montants sont agencés en trois paires consécutives selon une forme générale de W : les articulations 14, 24, 34 connectent des portions des montants 10, 20, 30, 40 successifs qui sont adjacentes, alternativement d'un côté et de l'autre de la structure de support 100 dans le sens longitudinal des montants.

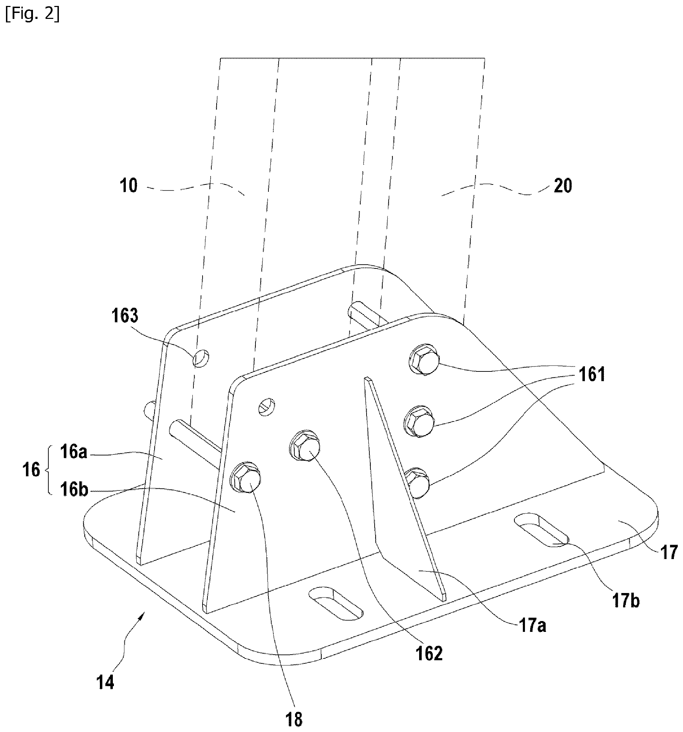

Un exemple d'articulation 14 est décrit en référence à la figure 2. Dans cet exemple, l'articulation 14 permet l'ancrage de la structure de support 100 vis-à-vis du sol. Toutefois, en toute généralité, l'ancrage vis-à-vis du sol pourrait être assuré par d'autres moyens, typiquement une autre pièce, que l'articulation 14 entre les montants 10 et 20.

Ainsi, l'articulation 14, ou plus généralement la partie 100b de la structure de support 100 configurée pour être ancrée vis-à-vis du sol, peut comprendre un sabot. Dans cet exemple, l'articulation 14 et le sabot sont confondus, c'est-à-dire formés par la même pièce. En d'autres termes, le sabot peut former une articulation 14 pour la paire 12 de montants 10, 20. Le sabot peut être, comme les montants, en tout matériau souhaité, par exemple en acier galvanisé.

Le sabot peut comprendre une armature 16, formée par exemple de deux flancs 16a, 16b venant de part et d'autre des deux montants 10, 20 de la paire 12 dans la direction transversale. Ainsi, les montants 10, 20 s'insèrent entre les flancs 16a, 16b de l'armature 16. Les flancs 16a, 16b sont ici plans mais toute autre forme adaptée peut être envisagée.

L'armature 16 est assemblée aux montants 10, 20. A cet effet, l'armature 16 peut comprendre des orifices, par exemple pré-percés, pour son assemblage aux montants 10, 20. Plus précisément, des boulons 161, 162 traversent les deux flancs 16a, 16b et, entre eux, les montants 10, 20 respectivement. Le nombre de boulons peut être adapté pour chaque montant. Ici, trois boulons 161, alignés ou non, assurent la fixation rigide du deuxième montant 20 à l'armature 16. Par ailleurs, un boulon 162, unique, offre un degré de liberté pour l'assemblage entre l'articulation 14 et le deuxième montant 20. Plus précisément, le boulon 162 forme un pivot 15 pour permettre la modification de la position relative entre le premier montant 10 et l'armature 16, donc entre le premier montant 10 et le deuxième montant 20. Ainsi, dans cet exemple, les montants 10, 20 sont articulés en rotation. Bien que cela ait été présenté en référence à une structure d'articulation particulière, d'autres types d'articulations permettent, de manière générale, d'articuler les montants 10, 20 en rotation. Le boulon 162 peut être sélectivement serré pour verrouiller ou non l'articulation 14.

La structure de support 100, par exemple l'armature 16, peut être pré-percée pour le verrouillage de l'articulation 14. A cet effet, l'armature 16 peut comprendre des orifices 163 permettant l'insertion d'un boulon destiné à bloquer le premier montant 10 dans la position dans laquelle il soutient la traverse 150. Les orifices 163 et le boulon qui y est inséré peuvent donc également contribuer au verrouillage de l'articulation 14, en complément ou en alternative au serrage du boulon 162. Avant l'installation de la structure de support 100, les orifices 163 peuvent être libres de tout boulon pour ne pas entraver la modification de la position du premier montant 10.

Outre l'armature 16, le sabot peut comprendre une semelle 17 plus particulièrement destinée à former l'interface entre la structure de support 100 et le sol. L'armature 16 permet la fixation des montants 10, 20 à la semelle 17. Par exemple, l'armature 16 et la semelle 17 peuvent former une pièce unique, monobloc. Au besoin, l'armature 16 peut être soutenue par rapport à la semelle 17 par un ou plusieurs contreforts 17a.

La semelle 17 peut être pré-percée pour son ancrage vis-à-vis du sol, comme le montrent les orifices 17b sur la figure 2. Ces orifices peuvent autoriser un certain jeu de positionnement de la semelle 17 par rapport à un point d'ancrage, et, à cet effet, être oblongs et/ou simplement plus larges que les pieux, agrafes, vis ou autres moyens qui y sont insérés.

Optionnellement, l'articulation 14 peut être pourvue d'une butée 18 pour limiter le débattement des montants 10, 20 l'un par rapport à l'autre. En l'espèce, cette butée 18, qui peut être amovible, prend la forme d'un boulon situé à l'opposé du montant fixe (le deuxième montant 20) par rapport au montant mobile (le premier montant 10). La butée 18 permet de limiter la rotation du premier montant 10 au-delà de la position dans laquelle il est prévu pour soutenir la traverse 150.

Comme le montre la figure 1, l'articulation 34, située d'un même côté de la structure de support 100 (en bas) que l'articulation 14, peut être sensiblement identique à l'articulation 14, abstraction faite du positionnement des orifices et/ou du dimensionnement des pièces. L'articulation 24, située du côté opposé de la structure de support 100, peut être de construction analogue mais ne nécessite pas de semelle et, comme illustré, ne comprend pas de butée. L'articulation 24 pourrait toutefois comprendre une butée si cela est souhaité. Les semelles, propres à l'ancrage vis-à-vis du sol, ne sont en revanche généralement prévues que d'un côté de la structure de support 100.

Comme il ressort de la comparaison entre les figures 1 et 5, dans le procédé de pré-assemblage, les montants sont assemblés dans une position relative différente de la position dans laquelle la structure de support 100 est configurée pour soutenir la traverse 150. Sur la figure 1, la structure de support 100 est présentée dans une première configuration. Dans cet exemple, les montants 10, 20, 30, 40 sont aussi proches les uns des autres que possible. Ainsi, la première configuration est particulièrement compacte et facilite le transport de la structure de support 100 d'un site à l'autre, typiquement de son site de fabrication jusqu'à son site d'installation. Plus généralement, dans la configuration compact, l'angle formé par deux montants 10, 20, 30, 40 d'une même paire peut être inférieur ou égal à 15°, de préférence encore à 12°, de préférence encore à 10°, de préférence encore à 5°.

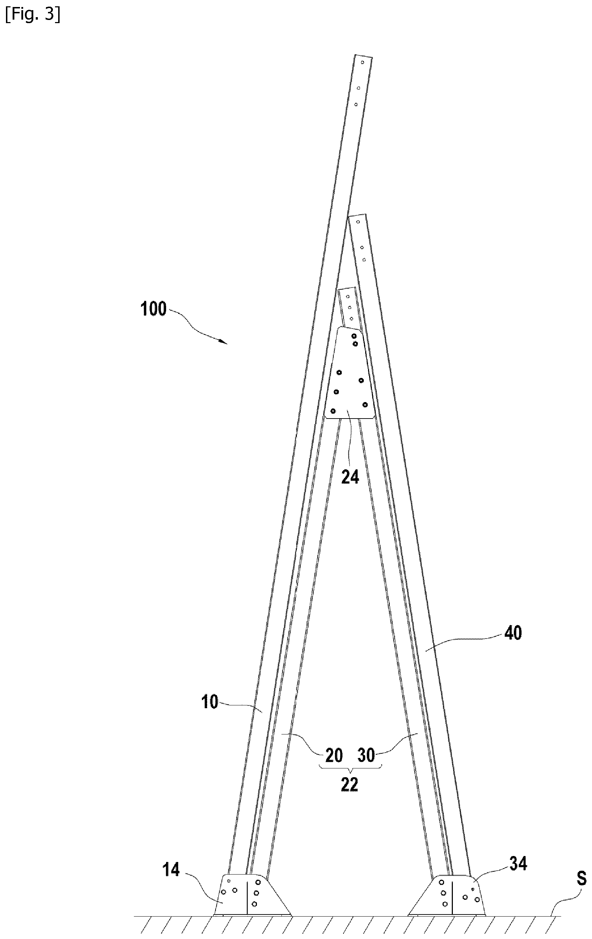

Un procédé d'installation de la structure de support 100, selon un mode de réalisation, est maintenant décrit en référence aux figures 3 à 5. Comme indiqué précédemment, ce procédé comprend la fourniture de la structure de support 100, par exemple grâce au procédé de pré-assemblage précédemment décrit. Ensuite, la position relative d'au moins deux montants d'une paire est modifiée au moyen de l'articulation et une partie 100b de la structure de support est ancrée vis-à-vis du sol.

C'est ce qui est représenté sur la figure 3 : par rapport à la figure 1, le deuxième montant 20 et le troisième montant 30 de la deuxième paire 22 (formant paire intermédiaire) ont été déplacés l'un par rapport à l'autre, en l'espèce écartés l'un par rapport à l'autre, par exemple de sorte que les semelles respectives des sabots formants les articulations 14, 34 appartiennent à un même plan, typiquement le plan du sol S. Avant ou après l'ancrage des sabots formant les articulations 14, 34 vis-à-vis du sol, l'articulation 24 peut être verrouillée de façon à figer la position relative des montants 20, 30 de la paire 22.

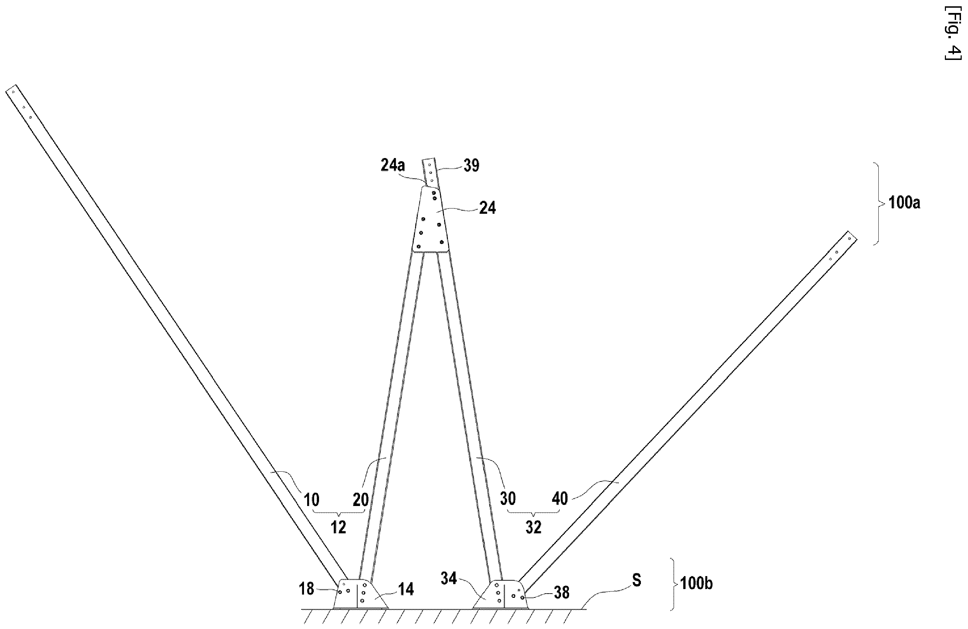

Ce schéma peut être répété avec les autres paires de la structure de support 100, comme le montre la figure 4 : par rapport à la figure 3, le premier montant 10 a été déplacé (ici écarté) par rapport au deuxième montant 20 de la même première paire 12. De même, le quatrième montant 40 a été déplacé (ici écarté) par rapport au troisième montant 30 de la même troisième paire 32. Ainsi, dans cet exemple, les paires latérales (première paire 12 et troisième paire 32) sont mises en position après la paire intermédiaire (deuxième paire 22) pour faciliter l'ancrage vis-à-vis du sol S, mais un ordre différent est également envisageable. Dans la configuration déployée dans laquelle les montants 10, 20, 30, 40 d'une même paire sont écartés les uns des autres par rapport à la configuration compacte, l'angle formé par deux montants 10, 20, 30, 40 d'une même paire peut être supérieur ou égal à 15°, de préférence à 20°, de préférence encore à 25°, de préférence encore à 30°, de préférence encore à 40°.

Pour faciliter le montage de la traverse 150, les articulations 14, 34 peuvent ne pas être verrouillées tout de suite après l'écartement des paires latérales 12, 32. Par exemple, le premier montant 10 et/ou le quatrième montant 40 peuvent être laissés en butée contre les butées 18, 38 des articulations 14, 34 correspondantes : ainsi, ces montants 10, 40 sont prépositionnés mais conservent une possibilité d'ajustement.

Le positionnement de la traverse 150 est plus particulièrement représenté sur les figures 5 et 6. Toutefois, on relève d'emblée sur la figure 4 que la partie 100a de la structure de support 100 configurée pour soutenir la traverse peut être prévue sur une prolongation 39 d'un montant au-delà de l'articulation. Plus précisément, le troisième montant 30 se prolonge, du côté de la traverse 150, au-delà de l'articulation 24 de la deuxième paire 22 à laquelle il appartient. Le troisième montant 30 présente donc une prolongation 39 destinée à soutenir la traverse 150 et pouvant comprendre, à cet effet, des orifices ou tout autre moyen de maintien ou de fixation.

Comme illustré sur les figures 5 et 6, la traverse 150 peut être un élément structurel configuré pour être soutenu par au moins un des montants. La traverse 150 peut comprendre un élément profilé s'étendant principalement selon une direction de l'espace ; toutefois, d'autres types de traverses sont également envisagés.

Comme illustré, la traverse 150 peut être emmanchée sur les montants 10, 20, 30, 40, les montants s'insérant entre deux profilés de la traverse 150. Pour faciliter le positionnement de la traverse 150, il est possible de prévoir que la structure de support 100, et notamment sa partie 100a configurée pour soutenir la traverse 150, comprenne, sur au moins un des montants, un guide configuré pour coopérer avec la traverse de façon à guider la traverse en coulissement. En l'occurrence, le guide peut être prévu sur l'articulation 24, elle-même montée sur le deuxième montant 20 et le troisième montant 30. Plus précisément, le guide 24a (voir aussi la figure 4) peut être formé par une surface de l'articulation 24, ici la surface supérieure, destinée à venir en contact avec la traverse 150. Le guide 24a peut être plan de façon à guider la traverse en coulissement. En d'autres termes, même avant toute fixation, la traverse 150 repose sur le guide 24a qui détermine son orientation et assure donc un guidage en coulissement dans la direction longitudinale de la traverse 150.

Une fois positionnée, la traverse 150 peut être fixée par rapport à un premier montant d'une paire, puis la position de l'autre montant de la paire est modifiée pour s'ajuster à la traverse 150 et permettre la fixation de la traverse 150 à cet autre montant. Ce n'est qu'ensuite que l'articulation entre les montants est verrouillée.

Ainsi, dans l'exemple de la figure 5, la traverse 150 peut tout d'abord être fixée à la prolongation 39, par exemple par boulonnage, ce par quoi la traverse 150 est fixée par rapport au troisième montant 30 mais aussi par rapport au deuxième montant 20 via l'articulation 24. Ensuite, le premier montant 10 est déplacé, par exemple depuis sa position en butée contre la butée 18, pour que ses orifices soient alignés avec ceux de la traverse 150. Lorsque la fixation entre la traverse 150 et le premier montant 10 est possible, celle-ci est réalisée, puis l'articulation 14 est verrouillée, typiquement par serrage du boulon 162 et insertion d'un boulon supplémentaire dans les orifices 163, ce par quoi la position relative du premier montant 10 par rapport au deuxième montant 20 est figée. Les mêmes étapes peuvent être réalisées pour le quatrième montant 40.

Bien que la présente description se réfère à des exemples de réalisation spécifiques, des modifications peuvent être apportées à ces exemples sans sortir de la portée générale de l'invention. Par exemple, les étapes présentées dans un certain ordre peuvent être effectuée dans un ordre différent techniquement réaliste. En alternative ou en complément des boulons, tout moyen mécanique de fixation adapté peut être utilisé, tel que des broches, tiges, goupilles ou autres. Plus généralement, des caractéristiques individuelles des différents modes de réalisation illustrés ou mentionnés peuvent être combinées dans des modes de réalisation additionnels. Par conséquent, la description et les dessins doivent être considérés dans un sens illustratif plutôt que restrictif.

## Revendications

1. Procédé d'installation d'une structure de support (100) d'une traverse (150), telle qu'une traverse d'ombrière, comprenant la fourniture, dans une configuration compacte, d'une structure comprenant au moins une paire (12, 22, 32) de montants (10, 20, 30, 40) articulés l'un par rapport à l'autre par une articulation (14, 24, 34), la modification de la position relative des montants (10, 20, 30, 40) au moyen de l'articulation (14, 24, 34), et l'ancrage d'une partie (100b) de la structure vis-à-vis du sol (S), une partie opposée (100a) de la structure étant configurée pour soutenir la traverse (150).

2. Procédé d'installation selon la revendication 1, dans lequel la modification de la position relative des montants (10, 20, 30, 40) comprend l'écartement des montants l'un par rapport à l'autre.

3. Procédé d'installation selon la revendication 1 ou 2, comprenant, après modification de la position relative des montants (10, 20, 30, 40), le verrouillage de l'articulation (14, 24, 34) de façon à figer la position relative des montants.

4. Procédé d'installation selon l'une quelconque des revendication 1 à 3, comprenant la fixation de la traverse (150) à un premier des montants (30, 20), puis la modification de la position relative d'un autre montant (10, 40) par rapport audit premier montant (30, 20) de façon à permettre la fixation de la traverse (150) à l'autre montant (10, 40), puis le verrouillage de l'articulation (14, 34) de façon à figer la position relative de l'autre montant (10, 40).

5. Structure de support (100) d'une traverse (150), telle qu'une traverse d'ombrière, comprenant au moins une paire (12, 22, 32) de montants (10, 20, 30, 40) articulés l'un par rapport à l'autre par une articulation (14, 24, 34) configurée pour permettre la modification de la position relative des montants, une partie (100a) de la structure étant configurée pour être ancrée vis-à-vis du sol (S) et une partie opposée (100b) de la structure étant configurée pour soutenir la traverse (150).

6. Structure selon la revendication 5, dans laquelle les montants (10, 20, 30, 40) sont articulés en rotation.

7. Structure selon la revendication 5 ou 6, comprenant plusieurs paires (12, 22, 32) de montants (10, 20, 30, 40) articulés l'un par rapport à l'autre, au moins un des montants (20, 30) de la structure étant commun à deux paires (12, 22, 32) consécutives ; de préférence dans laquelle la structure comprend quatre montants (10, 20, 30, 40) agencés en trois paires (12, 22, 32) consécutives selon une forme générale de W.

8. Structure selon l'une quelconque des revendications 5 à 7, dans lequel l'articulation (14, 34) est pourvue d'une butée (18, 38), optionnellement amovible, configurée pour limiter le débattement des montants (10, 20, 30, 40) l'un par rapport à l'autre.

9. Structure selon l'une quelconque des revendications 5 à 8, dans laquelle la partie (100b) configurée pour être ancrée vis-à-vis du sol comprend un sabot comprenant une semelle (17) et une armature (16) de fixation de la semelle (17) à un moins un des montants (10, 20), optionnellement dans lequel le sabot forme une articulation (14) pour une paire (12) de montants.

10. Structure selon l'une quelconque des revendications 5 à 9, dans laquelle la partie opposée (100a), configurée pour soutenir la traverse (150), est prévue sur une prolongation (39) d'un des montants (30) au-delà de l'articulation (24).

11. Structure selon l'une quelconque des revendications 5 à 10, dans laquelle la partie opposée (100a) comprend, sur au moins un des montants (30), un guide (24a) configuré pour coopérer avec la traverse (150) de façon à guider la traverse en coulissement.

12. Structure selon l'une quelconque des revendications 5 à 11, dans laquelle la structure est pré-percée pour son ancrage vis-à-vis du sol et/ou pour le verrouillage de l'articulation (14, 24, 34).

13. Structure selon l'une quelconque des revendications 5 à 12, dans laquelle l'articulation (14, 24, 34) comprend au moins l'un d'un pivot (15) et d'une glissière, porté par une pièce distincte des montants.

14. Procédé de pré-assemblage d'une structure selon l'une quelconque des revendications 5 à 13, comprenant la fourniture d'au moins une paire (12, 22, 32) de montants (10, 20, 30, 40) et l'assemblage des montants d'une même paire par une articulation (14, 24, 34) configurée pour permettre la modification de la position relative des montants, les montants (10, 20, 30, 40) étant assemblés l'un à l'autre dans une configuration compacte, dans une position relative différente de la position dans laquelle la structure est configurée pour soutenir la traverse (150).

15. Procédé de pré-assemblage selon la revendication 14, dans lequel l'articulation (14, 24, 34) est assemblée rigidement à l'un des montants (20, 30) de la paire et assemblée avec au moins un degré de liberté à l'autre des montants (10, 40) de la paire.
